(19) Europäisches Patentamt / European Patent Office / Office européen des brevets

(11) **EP 3 673 305 B1**

(12) **EUROPEAN PATENT SPECIFICATION**

(45) Date of publication and mention of the grant of the patent:
**16.06.2021 Bulletin 2021/24**

(21) Application number: **18800467.5**

(22) Date of filing: **21.09.2018**

(51) Int Cl.:
*G02B 5/18* (2006.01)        *G02B 21/00* (2006.01)
*G03H 1/04* (2006.01)        *G02B 27/28* (2006.01)
*G03H 1/08* (2006.01)

(86) International application number:
**PCT/CZ2018/050050**

(87) International publication number:
**WO 2019/057227 (28.03.2019 Gazette 2019/13)**

(54) **ADD-ON IMAGING MODULE FOR OFF-AXIS RECORDING OF POLARIZATION CODED WAVES**

ZUSATZBILDGEBUNGSMODUL ZUR AUSSERAXIALEN AUFZEICHNUNG VON POLARISATIONSCODIERTEN WELLEN

MODULE D'IMAGERIE COMPLÉMENTAIRE DESTINÉ À L'ENREGISTREMENT HORS AXE DES ONDES À CODAGE DE POLARISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2017 CZ 20170570**

(43) Date of publication of application:
**01.07.2020 Bulletin 2020/27**

(73) Proprietors:
  • **Vysoké Uceni Technické V Brne**
    **60200 Brno (CZ)**
  • **Univerzita Palackého v Olomouci**
    **779 00 Olomouc (CZ)**

(72) Inventors:
  • **BOUCHAL, Petr**
    **61600 Brno (CZ)**
  • **CHMELÍK, Radim**
    **62300 Brno (CZ)**

  • **BOUCHAL, Zdenek**
    **75002 Prerov (CZ)**
  • **CELECHOVSKY, Radek**
    **75125 Lazníky (CZ)**

(74) Representative: **Dadej, Leopold**
    **Na Valtické 339/6**
    **691 41 Breclav 4 (CZ)**

(56) References cited:
  WO-A1-2008/110239      US-A1- 2013 286 403
  US-A1- 2013 301 093      US-B1- 8 072 610

  • **MAIONE BRYAN ET AL: "Narrowband emission line imaging spectrometry using Savart plates", PROCEEDINGS OF SPIE; [PROCEEDINGS OF SPIE ISSN 0277-786X VOLUME 10524], SPIE, US, vol. 9853, 4 May 2016 (2016-05-04), pages 985309-985309, XP060065553, DOI: 10.1117/12.2224275 ISBN: 978-1-5106-1533-5**

## Description

Field of the Invention

The invention relates to an add-on imaging module for the off-axis recording of polarization coded waves that might be connected to any polarization adapted interferometric system and provides holographic imaging using low-coherence light.

Background of the Invention

Recently, optical microscopy has been enriched by digital imaging techniques that were deployed in quantitative phase imaging (QPI) having wide applications in biophotonics and material sciences. The QPI is most often implemented by holographic imaging, in which information about the object under study is encoded into the phase difference introduced between the signal (object) and reference wave.

The interference record created by the signal and reference waves (hologram) is composed of three terms - true holographic image, conjugate holographic image and zero-order image (D.C. term). For the correct hologram reconstruction, a separation of the true holographic image is required. This can be achieved in two different experimental schemes known as in-line and off-axis holography. In the in-line holography, the signal and reference beams share almost the same optical path and hit the detector at the same angle. To reconstruct the true holographic image, at least three holographic records taken with different phase shifts imposed on the reference wave are needed. In the off-axis holography, the signal and reference beams interfere with mutual angular inclination allowing a single-shot reconstruction of the true holographic image.

In the in-line holography, the interferometric beams are collinear at the output of the interferometer and the true holographic image is reconstructed by adopting sophisticated phase-shifting methods. The developed techniques involve mechanical scanning implemented by piezoelectric actuators, phase modulation introduced by optoelectronic devices or achromatic phase-shifting using transformation of the polarization state of light.

The phase-shifting procedure is technologically demanding since random mechanical and optical changes might affect accuracy of the phase shifts introduced between the interferometric beams or alter their phase during the repeated recording. These unwanted effects reduce quality and accuracy of the quantitative image reconstruction.

In the off-axis holography, the interferometric beams are recombined while holding different angles with respect to the optical axis. The mutual angular inclination of the beams results in creation of spatial carrier frequency allowing a single-shot reconstruction of the true holographic image applying the Fourier methods.

To achieve the different inclination of the interferometric beams, two independent optical paths for the signal and reference beam must be used. The duplication of the optical path in the signal and reference arm of the interferometer makes adjustment of the system difficult and increases its sensitivity to vibrations, temperature fluctuations and inhomogeneities in the refractive index. Hence, the implementation of a double-path system is demanding and costly.

In standard off-axis systems, the different angular inclination of the beams is achieved by a mirror or a similarly operating optical component placed in the signal or reference path. The interferometer with such off-axis adjustment is no longer achromatic and requires the use of a nearly monochromatic light with the coherence length sufficient for interference of the beams in the entire field of view. Laser light provides an extremely long coherence length but causes coherence noise strongly decreasing the performance of the holographic imaging.

The aforementioned problems are solved by a coherence controlled holographic microscope (CZ302491, EP2378244 B1, US8526003 B2), which is based on the imaging of a diffraction grating used as a diffractive beam splitter. The diffractive dispersion accompanying imaging of the diffraction grating provides wavelength-dependent inclination angles of the interferometric beams. As a consequence, the monochromatic components of the interferometric beams are recombined while creating the interference fringes with the period independent of the wavelength. The coherence controlled off-axis holographic system allows a single-shot reconstruction of the true holographic image while taking advantage of the use of low coherence light.

Negative external effects connected both to in-line and off-axis arrangements can be suppressed, and more robust imaging in cost-effective systems achieved, provided that a common-path interferometric configuration is used. In the common-path geometry, the interferometric beams share the same optical paths and random external variations are imposed equally on both beams allowing their self-compensation in the hologram recording.

To take advantage of the common-path systems, the methods must be used allowing distinguishing the signal and reference beams sharing the same optical path. This is necessary for independent modification or modulation of the interferometric beams required in the phase-shifting procedure or the contrast adjustment. To distinguish collinear light beams, their orthogonal linear polarization states are commonly utilized.

An example of the polarization strategy is the invention US8334981 that refers to the polarization adapted Mirau interference objective. The interferometer divides impinging light into two linearly polarized waves in such a way that the signal and reference waves reflected from the sample and the reference mirror, respectively, acquire the orthogonal polarizations. This is achieved by the Mirau interference objective working with a non-polarizing beam splitter covered by a thin layer orthogonally polarizing transmitted and reflected light. The polarization coded signal and reference waves propagate through the same optical path towards the detector. The electric field oscillations of both signal and reference waves are projected into the same direction by the analyzer placed in front of a detector. The angular orientation of the analyzer drives intensity of the transmitted waves and might be used for optimization of the interference contrast. The interference pattern is recorded by the detector which is most often CCD or CMOS chip.

A similar configuration is utilized in the polarization adapted Mirau interferometer according to the invention US8072610. This system works with a linearly polarized illumination and uses the Mirau interference objective with polarization adaptation of the imaging path. The non-polarizing beam splitter is placed within the objective and sandwiched between anisotropic plates acting as quarter-wave plates. The fast axis of the individual quarter-wave plates is oriented at the angles 0° and 45° with respect to the direction of the linear polarization of the illuminating beam. The signal and reference waves reflected at the sample and the reference mirror, respectively, acquire orthogonal linear polarizations at the output of the Mirau interference objective. The polarization coded signal and reference waves are then merged into the same optical path through which they pass towards the detector. The electric field oscillations of the signal and reference waves are projected into the same direction by the analyzer, making the recording of their interference possible.

Both aforementioned systems use the common-path configuration providing robust imaging in which external effects are effectively suppressed. However, the true holographic image is reconstructed provided that the phase-shifting procedure is implemented by a piezoelectric transducer, an electro-optical modulator or a polarization system and at least four holograms are recorded.

The off-axis recording of holograms retaining benefits of the common-path arrangement was proposed in the paper Rongli G. et al., "Off-axis digital holographic microscopy with LED illumination based on polarization filtering," Appl. Opt. 52, 8233-8238 (2013). This method is based on the Linnik interferometer working with the signal and reference waves possessing orthogonal linear polarizations created by common polarizing components. The Linnik interferometer is connected to a $4f$ imaging system composed of a diffraction grating, a pair of Fourier lenses and a linear polarizer. The diffraction grating is placed in the front focal plane of the first Fourier lens, while the linear polarizer is placed in its back focal plane. This plane coincides with the front focal plane of the second Fourier lens. The diffraction grating deflects the signal and reference waves into all diffraction orders of the grating with the light intensity in the individual orders depending on the design of the grating. The signal and reference waves penetrating to unwanted diffraction orders must be blocked by a diaphragm and a polarization filter used that allows passage of the signal and reference wave only through +1 st and -1 st diffraction order, respectively. Using the linear polarizer, the electric field oscillations of the signal and reference waves are projected into the same direction before detection. At the detector, the hologram with an achromatic carrier frequency is created.

This system works with the off-axis recording of holograms allowing a single-shot image reconstruction, but its disadvantage is the use of a standard diffraction grating. This grating has a low efficiency and deflects signal and reference waves into all diffraction orders including those that exhibit disruptive effects. The separation of the signal and reference beams in +1 st and -1 st diffraction order requires a troublesome blocking of unwanted light and a polarization filtering. This reduces the efficiency of the system, which increases the integration time and decreases the measurement accuracy.

Another possible application of the off-axis recording of holograms using the light source of low coherence is presented in the document WO 2011/042442. However, this solution needs a double-path system that is highly sensitive to vibrations and uses a standard diffraction grating with low diffraction efficiency.

In the document MAIONE BRYAN ET AL: "Narrowband emission line imaging spectrometry using Savart plates",PROCEEDINGS OF SPIE; [PROCEEDINGS OF SPIE ISSN 0277-786X VOLUME 10524], SPIE, US, vol. 9853, 4 May 2016 (2016-05-04), pages 985309-985309, the use of a polarization sensitive beam splitter creating an angular separation between the axes of the beams with the left-hand and right-hand circular polarization is disclosed.

Summary of the Invention

The above-mentioned drawbacks are to a substantial extent removed and the object of the invention is fulfilled by an add-on imaging module for the off-axis recording of polarization coded waves. The presented add-on imaging module consists gradually from the light source of the first polarization sensitive beam splitter adapted to splitting polarization coded waves wherein each of the polarization coded waves propagates in a different direction, the first optical system of the module and a detector, where the first optical system of the module comprises gradually from the light source the second optical sub-system, the linear polarizer adapted to projecting the electric field oscillations of the polarization coded waves into the same direction and the first optical sub-system adapted to project the polarization coded waves onto the detector. The add-on imaging module comprises the first polarization sensitive beam splitter, which is realized as a geometric-phase grating. The geometric-phase grating is an optical component capable of directional separation of the light beams according to their polarization states.

The preferred embodiment of the first optical system of the module comprises the linear polarizer, the first optical sub-system and the second optical sub-system, in which the imaging systems contain at least one imaging optical component with positive optical power.

Another embodiment of the add-on imaging module involves the second optical system of the module consisting of at least one imaging optical component with positive optical power. The second optical system of the module is placed in front of the first polarization sensitive beam splitter and it further contains the second polarization sensitive beam splitter being inserted between the first polarization sensitive beam splitter and the first optical system of the module.

In another preferred embodiment of the add-on imaging module, the first optical system of the module comprises a quarter-wave plate placed between the first polarization sensitive beam splitter and the linear polarizer. In another preferred embodiment, the add-on imaging module comprises the quarter-wave plate being placed between the second polarization sensitive beam splitter and the linear polarizer.

Another preferred embodiment of the add-on imaging module comprises the quarter-wave plate being placed between the polarization adapted in-line interferometer and the first polarization sensitive beam splitter.

The invention further provides the off-axis recording of the polarization coded waves by the add-on imaging module. This method benefits from the use of the polarization sensitive beam splitter placed in the image plane of the polarization adapted in-line interferometer. The polarization sensitive beam splitter performs angular separation of the orthogonally polarized waves, which propagate in different directions when they exit the interferometer. The polarization coded and spatially separated waves further enter the first optical system of the module, where the oscillations of their electric field are projected into the same direction by the linear polarizer. In the next step, both waves are transformed by the first optical sub-system while creating the off-axis hologram with the carrier frequency independent of the wavelength of the used light.

The off-axis recording of the polarization separated waves in the add-on imaging module is alternatively realized using the second optical sub-system influencing the propagation directions of the orthogonally polarized waves behind the first polarization sensitive beam splitter. The second optical sub-system is positioned with respect to the first polarization sensitive beam splitter in such a way that it creates its image in infinity and thus collimates the polarization coded waves. Subsequently, the electric field oscillations of the polarization coded waves are projected into the same direction by the linear polarizer and focused by the first optical sub-system on the detector, where the off-axis hologram with carrier frequency independent of the wavelength of the used light is recorded.

In another preferred embodiment, the off-axis recording of the polarization coded waves by the add-on imaging module is modified in such a way that the polarization coded waves pass through the quarter-wave plate transforming the orthogonal circular polarization states of the waves to the orthogonal linear polarizations. The waves with the orthogonal linear polarizations then pass through the linear polarizer that provides projection of the electric field oscillations of the waves in the same direction, while amplitudes of the waves are adjusted by changing the orientation angle of the polarizer.

Another modification of the off-axis recording of the polarization coded waves by the add-on imaging module is implemented in such a way that the polarization coded waves are transformed from the image plane of the interferometer to the plane of the first polarization sensitive beam splitter by the use of the second optical system of the module that also provides collimation of the waves. The collimated and orthogonally polarized waves are then angularly separated by the first polarization sensitive beam splitter; hence they propagate in different directions. The waves with different propagation directions are transformed by the second polarization sensitive beam splitter that inclines the waves into the original directions coinciding with the propagation directions of the waves in front of the first polarization beam splitter and at the same time introduces a mutual lateral shift of the waves. The laterally shifted and polarization coded waves enter the first optical system of the module, where the electric field oscillations of the waves are projected into the same direction by the linear polarizer. The waves with the unified polarization state interfere at the detector and create an off-axis hologram with the carrier frequency independent of the wavelength of the used light.

In another preferred embodiment, the off-axis recording of the polarization coded waves by the add-on imaging module is modified in such a way that the polarization coded waves pass through the quarter-wave plate transforming the orthogonal circular polarization states of the waves to the orthogonal linear polarizations. The waves with the orthogonal linear polarizations then pass through the linear polarizer that provides projection of the electric field oscillations of the waves into the same direction, while amplitudes of the waves are adjusted by changing the orientation angle of the polarizer.

In another preferred modification of the off-axis recording of the polarization coded waves by the add-on imaging module, the waves emerging from the polarization adapted in-line interferometer are polarization separated into the orthogonal linear polarizations that are then converted to the orthogonal circular polarizations by the use of the quarter-wave plate.

List of exemplary embodiments of the invention

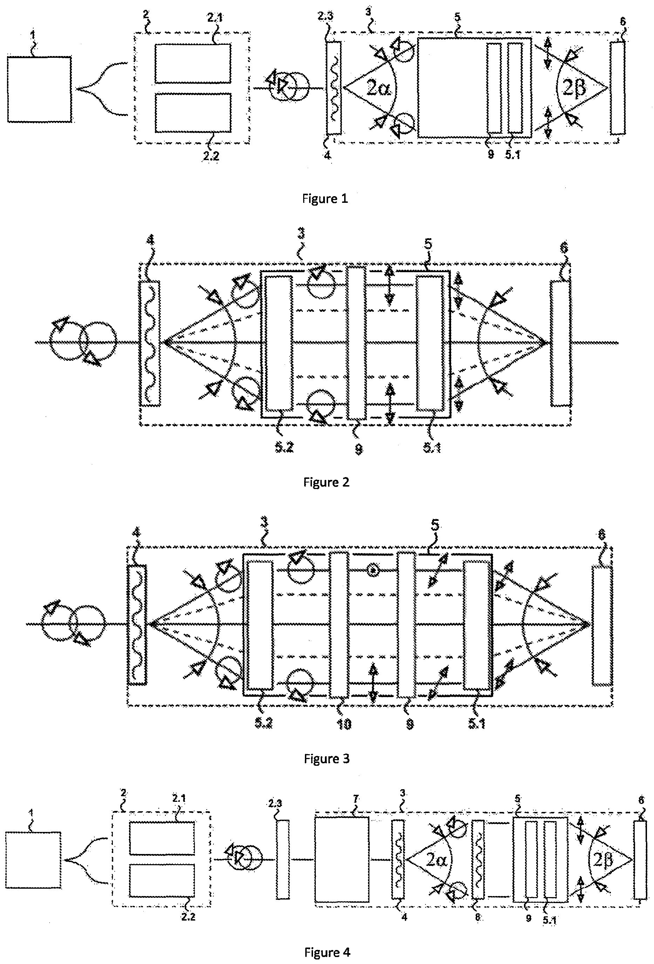

Figure 1 illustrates an optical system providing the polarization coded waves and the scheme of the connected add-on imaging module for the recording of the off-axis holograms working with the first polarization sensitive beam splitter, the detector and the first optical system of the module, which is composed of the linear polarizer and the first optical sub-system.

Figure 2 illustrates the scheme of the add-on imaging module for the off-axis recording of the polarization coded waves working with the first polarization sensitive beam splitter, the detector and the first optical system of the module, which is composed of the linear polarizer and the first and the second optical sub-system.

Figure 3 illustrates the scheme of the add-on imaging module for the off-axis recording of the polarization coded waves working with the first polarization sensitive beam splitter, the detector and the first optical system of the module, which is composed of the quarter-wave plate, the linear polarizer and the first and the second optical sub-system.

Figure 4 illustrates an optical system providing the polarization coded waves and the scheme of the connected add-on imaging module for the recording of the off-axis holograms working with the second optical system of the module, the first and the second polarization sensitive beam splitter, the detector and the first optical system of the module, which is composed of the linear polarizer and the first optical sub-system.

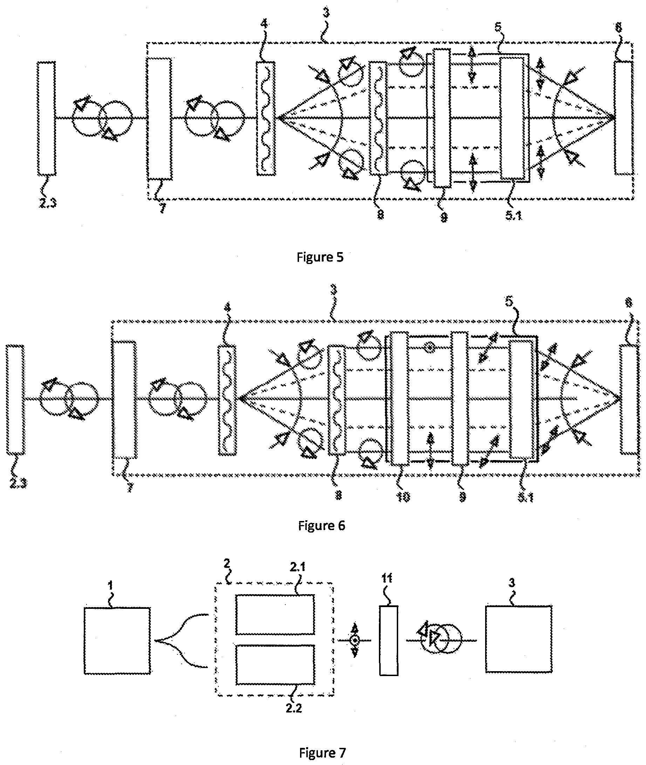

Figure 5 illustrates the scheme of the add-on imaging module for the off-axis recording of the polarization coded waves working with the second optical system of the module, the first and the second polarization sensitive beam splitter, the detector and the first optical system of the module, which is composed of the linear polarizer and the first optical sub-system.

Figure 6 illustrates the scheme of the add-on imaging module for the off-axis recording of the polarization coded waves working with the second optical system of the module, the first and the second polarization sensitive beam splitter, the detector and the first optical system of the module, which is composed of the quarter-wave plate, the linear polarizer and the first optical sub-system.

Figure 7 illustrates an optical system providing the polarization coded waves and the scheme of the connected add-on imaging module for recording of the off-axis holograms working with the quarter-wave plate transforming the orthogonal linear polarizations of the signal and reference waves coming from the optical system to the orthogonal circular polarizations.

Examples of Preferred Embodiments

Figure 1 shows the scheme of the add-on imaging module 3 for the off-axis recording of the polarization coded waves. The add-on imaging module 3 is connected to a polarization adapted system 2 working with the polychromatic, spatially incoherent light source 1. The polarization adapted system 2 divides light emitted by the source 1 into the signal path 2.1 and the reference path 2.2. The measured sample is placed in the object plane of the signal path, while in the object plane of the reference path, the reference sample is placed. The reference sample might be for example a plane mirror, a microscope slide or any other element providing known modulation of the transmitted or reflected wave. Both the signal and reference paths are designed to create images of their object planes at the image plane of the polarization adapted system 2.3. Optical components of the signal and reference path are chosen to provide the same optical path length, i.e. the light needs the same time for passing the signal and reference paths.

The polarization adapted system 2 is further assumed to provide the polarization coded waves that travel through the paths 2.1 and 2.2. These waves are determined by the Jones vectors $J_i$, $i = 1,2$, satisfying the orthogonality condition $J_1^\dagger \cdot J_2 = 0$, where $J_1^\dagger$ is the Hermitian conjugate vector.

The add-on imaging module 3 is connected at the output of the polarization adapted system 2. The add-on imaging module 3 is composed of the first polarization sensitive beam splitter 4, the first optical system 5 of the module and the detector 6. The first optical system 5 of the module is composed of the first optical sub-system 5.1 and the linear polarizer 9. When connecting the add-on imaging module 3 to the polarization adapted system 2, the image plane 2.3 is set to coincide with the plane of the polarization sensitive beam splitter 4. The first polarization sensitive beam splitter 4 provides the directional separation of the individual light beams originating from the signal path 2.1 and the reference path 2.2 in such a way that the axes of the beams are inclined by the angle $2\alpha$. The angle $2\alpha$ is given by the grating equation $\sin(\alpha) = \lambda/d$, where $\lambda$ is the wavelength and $d$ denotes the spatial period of the grating.

The first optical system 5 of the module is composed of the first optical sub-system 5.1. The imaging system 5.1 is designed in such a way that the plane 2.3, i.e. the plane of the polarization sensitive beam splitter 4, is imaged with the lateral magnification $m$ to the image plane of the module 3, which coincides with the detector 6. The first optical system 5 of the module further contains the linear polarizer 9 that projects the electric field oscillations of the waves coming from the signal path 2.1 and the reference path 2.2 into the same direction before the waves hit the detector 6.

The polarization coded light beams, axes of which form the angle $2\alpha$ behind the polarization sensitive beam splitter 4, recombine with the mutual angular inclination $2\beta$ in the plane of the detector 6. This angular inclination is determined by $\sin(\beta) = \lambda/(m \cdot d)$. The interference of the beams creates the off-axis hologram that is recorded at the detector 6 and its spatial carrier frequency is independent of the wavelength, $\upsilon_N = 2/(m \cdot d)$. The spatial carrier frequency is given by the optical parameters of the module 3. These parameters must be optimized to create the spatial carrier frequency allowing separation of the true holographic image from the non-diffracted light, when the holographic records are processed by the methods of Fourier optics.

In the preferred embodiment, the signal path 2.1 and the reference path 2.2 share any number of optical components and work in the common-path configuration. The polarization sensitive beam splitter might be represented by the geometric-phase grating that operates on the Pancharatnam-Berry phase and creates the angular separation $2\alpha$ between the axes of the beams with the left-hand and right-hand circular polarization, while achieving the efficiency higher than 90%. The linear polarizer 9 might be any polarization component that transforms general polarization state to linear polarization (for example polarization circular to linear). The first optical sub-system 5.1 might be composed of any number of optical components such as lenses, lens systems or objectives that satisfy the above defined conditions for recording of the off-axis hologram with the optimal spatial carrier frequency.

Figure 2 shows the scheme of the imaging module 3. In this embodiment, the imaging module 3 gradually consists of the first polarization sensitive beam splitter 4, the second optical sub-system 5.2, the linear polarizer 9, the first optical sub-system 5.1 and the detector 6. The optical components of the first optical sub-system 5.1 and the second optical sub-system 5.2 are selected to create parallel rays between both optical systems and transfer the image from the image plane 2.3 to the plane coinciding with the detector 6. Between the first optical sub-system 5.1 and the second optical sub-system 5.2 the linear polarizer 9 is inserted that ensures projection of the electric field oscillations of the polarization coded waves into the same direction. The mutual position of the linear polarizer 9 and the first optical sub-system 5.1 may vary in different embodiments.

Figure 3 shows the scheme of the imaging module 3. In this embodiment, the imaging module 3 gradually consists of the first polarization sensitive beam splitter 4, the second optical sub-system 5.2, the quarter-wave plate 10, the linear polarizer 9, the first optical sub-system 5.1 and the detector 6. The optical components of the first optical sub-system 5.1 and the second optical sub-system 5.2 are selected to create parallel rays between both optical systems and transfer image from the image plane 2.3 to the plane coinciding with the detector 6. Between the second optical sub-system 5.2 and the linear polarizer 9 the quarter-wave plate 10 is inserted, ensuring transformation of the orthogonal circular polarization states of the polarization coded waves to their orthogonal linear polarizations. The linear polarizer 9 projects the electric field oscillations of the polarization coded waves into the same direction. The mutual position of the linear polarizer 9, the first optical sub-system 5.1 and the second optical sub-system 5.2 may vary in different embodiments. The combination of the quarter-wave plate 10 and the linear polarizer 9 allows controlling the amplitude of the transmitted waves and optimizing the contrast of the interference patterns.

Figure 4 shows the scheme of the imaging module 3 for the off-axis recording of the polarization coded waves. The imaging module 3 is connected to the polarization adapted optical system 2, which is further connected to the polychromatic and spatially incoherent light source 1. The light emitted by the source 1 enters the polarization adapted system 2, where it is divided into the signal path 2.1 and the reference path 2.2. Both the signal and the reference imaging paths are designed to image their object planes to the same image plane 2.3. The optical components of the signal and reference path are selected to provide the same optical path length, i.e. the light needs the same time for passing the signal and reference path.

The polarization adapted system 2 is further assumed to provide the polarization coded waves that travel through the paths 2.1 and 2.2. These waves are determined by the Jones vectors $J_i$, $i = 1, 2$, satisfying the orthogonality condition $J_1^{\dagger} \cdot J_2 = 0$, where $J_1^{\dagger}$ is the Hermitian conjugate vector.

The add-on imaging module 3 is connected at the output of the polarization adapted system 2. The add-on imaging module 3 gradually consists of the second optical system 7 of the module, the first polarization sensitive beam splitter 4, the second polarization sensitive beam splitter 8, the first optical system 5 of the module and the detector 6. The second optical system 7 of the module is placed between the image plane 2.3 and the first polarization sensitive beam splitter 4 and might be composed of any optical components. The optical components of the second optical system 7 of the module are selected in such a way that the image from the image plane 2.3 is transferred to infinity and the parallel rays hit the first polarization sensitive beam splitter 4.

The first polarization sensitive beam splitter 4 is advantageously realized as a geometric-phase grating that introduces the angular separation $2\alpha$ between the orthogonally polarized light beams coming from the signal path 2.1 and the reference path 2.2. The angle $2\alpha$ is given by the grating equation $\sin \alpha = \lambda/d$, where $\lambda$ is the wavelength and $d$ denotes the grating period. The second polarization sensitive beam splitter 8 is advantageously realized as a geometric-phase grating that creates the opposite angular inclination of the polarization coded waves compared to that introduced by the first polarization sensitive beam splitter 4, and compensates its diffractive dispersion. In this way, the orthogonally polarized beams are laterally shifted according to their wavelength behind the polarization sensitive beam splitter 8, while the propagation directions of the beams remain the same as those prior to entering the first polarization sensitive beam splitter 4.

The first optical system 5 of the module might be composed of any optical components ensuring that the image of the plane 2.3 is created at the image plane of the imaging module 3 coinciding with the detector 6. The first optical system 5 of the module is composed of the first optical sub-system 5.1 and the linear polarizer 9. The linear polarizer 9 projects the electric field oscillations of the polarization coded waves coming from the signal path 2.1 and the reference path 2.2 into the same direction, before the waves hit the detector 6.

The polarization coded collimated light beams, axes of which form the angle $2\alpha$ behind the polarizing sensitive beam splitter 4, recombine with the mutual angular inclination $2\beta$ in the plane of the detector 6. In the paraxial approximation, the angle $\beta$ is given by $\beta = L \cdot \lambda/(f \cdot d)$, where $L$ is the distance between the first polarization sensitive beam splitter 4 and the second polarization sensitive beam splitter 8 and $f$ denotes the focal length of the first optical sub-system 5.1. The interference of the beams creates the off-axis hologram that is recorded at the detector 6 and its spatial carrier frequency $\upsilon_N = 2L/(f \cdot d)$ is independent of the wavelength. The spatial carrier frequency is given by the optical parameters of the imaging module 3. These parameters must be optimized to create spatial carrier frequency allowing separation of the true holographic image from the non-diffracted light, when the holographic records are processed by the methods of Fourier optics.

In the preferred embodiment, the signal path 2.1 and the reference path 2.2 share any number of optical components and work in the common-path configuration. The first polarization sensitive beam splitter 4 and the second polarization sensitive beam splitter 8 might be realized as geometric-phase gratings working on the Pancharatnam-Berry phase. The first polarization sensitive beam splitter 4 deflects incident collimated wave with the left-hand circular polarization by the angle $\alpha$ while changing its polarization state to the right-hand circular polarization. The incident wave with the right-hand circular polarization is deflected by the angle $-\alpha$ while its polarization state is changed to the left-hand circular polarization. Hence, the propagation directions of the beams with the orthogonal circular polarizations are inclined by the angle $2\alpha$ when the beams leave the first polarization sensitive beam splitter 4. The second polarization sensitive beam splitter 8, realized as a geometric-phase grating, works similarly to the polarization sensitive beam splitter 4 and introduces the directional inclination of the collimated beams according to the handedness of their circular polarization. Consequently, the beam incident on the first polarization sensitive beam splitter 4 with the left-hand polarization maintains both the polarization state and the propagation direction when it leaves the second polarization sensitive beam splitter 8. The same situation occurs in the case of the beam incident on the first polarization sensitive beam splitter 4 with the right-hand circular polarization. The second polarization sensitive beam splitter 8 compensates the diffractive dispersion of the first polarization sensitive beam splitter 4; hence the orthogonally polarized beams are laterally shifted according to their wavelength behind the polarization sensitive beam splitter 8, while the propagation directions of the beams remain the same as those prior to entering the first polarization sensitive beam splitter 4. The individual imaging systems of the module might be composed of any number of optical components such as lenses, lens systems or objectives that satisfy the above defined conditions for recording of the off-axis hologram with the optimal spatial carrier frequency.

Figure 5 shows the scheme of the imaging module 3. In this embodiment, the imaging module 3 is composed of the second optical system 7 of the module, the first polarization sensitive beam splitter 4, the second polarization sensitive beam splitter 8, the linear polarizer 9, the first optical sub-system 5.1 and the detector 6. The first polarization sensitive beam splitter 4 introduces the angular separation $2\alpha$ between the orthogonally polarized light beams coming from the signal path 2.1 and the reference path 2.2. The angle $\alpha$ is given by the grating equation $\sin \alpha = \lambda/d$. The second polarization sensitive beam splitter 8 creates the opposite angular inclination of the polarization coded waves compared to that introduced by the first polarization sensitive beam splitter 4, and compensates its diffractive dispersion. In this way, the orthogonally polarized beams are laterally shifted according to their wavelength behind the polarization sensitive beam splitter 8, while the propagation directions of the beams remain the same as those prior to entering the first polarization sensitive beam splitter 4. The linear polarizer 9 projects the electric field oscillation of the polarization coded waves into the same direction.

Figure 6 shows the scheme of the imaging module 3. In this embodiment, the imaging module 3 gradually consists of the second optical system 7 of the module, the first polarization sensitive beam splitter 4, the second polarization sensitive beam splitter 8, the quarter-wave plate 10, the linear polarizer 9, the first optical sub-system 5.1 and the detector 6. The optical components of the second optical system 7 of the module are selected in such a way that the image from the image plane 2.3 is transferred to infinity and the parallel rays hit the first polarization sensitive beam splitter 4.

The first polarization sensitive beam splitter 4 introduces the angular separation $2\alpha$ between the orthogonally polarized light waves coming from the signal path 2.1 and the reference path 2.2. The angle $2\alpha$ is given

by the grating equation sin $\alpha = \lambda/d$. The second polarization sensitive beam splitter 8 creates the opposite angular inclination of the polarization coded waves compared to that introduced by the first polarization sensitive beam splitter 4, and compensates its diffractive dispersion. In this way, the orthogonally polarized beams are laterally shifted according to their wavelength behind the polarization sensitive beam splitter 8, while the propagation directions of the beams remain the same as those prior to entering the first polarization sensitive beam splitter 4.

Between the second polarization sensitive beam splitter 8 and the linear polarizer 9 the quarter-wave plate 10 is inserted that converts the light waves coded in the orthogonal circular polarizations to the waves with the orthogonal linear polarizations. The linear polarizer 9 projects the electric field oscillations of the polarization coded waves into the same direction. The combination of the quarter-wave plate 10 and the linear polarizer 9 allows controlling the amplitude of the transmitted waves and optimizing the contrast of the interference patterns.

Figure 7 shows the scheme of the imaging module 3 for the off-axis recording of the polarization coded waves. The imaging module 3 is connected to the polarization adapted optical system 2, which is further connected to the polychromatic and spatially incoherent light source 1. The light emitted from the source 1 enters the polarization adapted system 2, where it is divided into the signal path 2.1 and the reference path 2.2. Both the signal and reference imaging paths are designed to image their object planes to the same image plane 2.3. The optical components of the signal and reference path are selected to provide the same optical path length, i.e. the light needs the same time for passing the signal and reference path.

The polarization adapted system 2 is further assumed to provide the polarization coded waves that travel through the paths 2.1 and 2.2. These waves are determined by the Jones vectors $J_i$, $i$ = 1, 2, satisfying the orthogonality condition $J_1^\dagger \cdot J_2 = 0$, where $J_1^\dagger$ is the Hermitian conjugate vector.

Provided that the light waves are coded into the orthogonal linear polarizations at the output of the polarization adapted system 2, the input quarter-wave plate 11 is used to transform the orthogonal linear polarizations of the waves into the orthogonal circular polarization states. If the polarization adapted system provides waves with the orthogonal circular polarization, the quarter-wave plate 11 is omitted and the light waves enter the imaging module 3.

The imaging module 3 might be connected to any polarization adapted optical system 2 providing the signal and reference waves that are orthogonally polarized in the basis of the circular or linear polarization states.

List of reference signs

1 light source
2 polarization adapted interferometric system
2.1 imaging signal path
2.2 imaging reference path
2.3 image plane
3 imaging module
4 first polarization sensitive beam splitter
5 first optical system of the module
5.1 first optical sub-system
5.2 second optical sub-system
6 detector
7 second optical system of the module
8 second polarization sensitive beam splitter
9 linear polarizer
10 quarter-wave plate
11 input quarter-wave plate

**Claims**

1. An imaging module (3) for the off-axis recording of the polarization coded waves **characterized in that** the imaging module (3) comprises in sequence: a side for receiving a light field comprising polarization coded waves from a light source (1), a first polarization sensitive beam splitter (4) adapted to create an angular separation between the axes of the beams with the left-hand and right-hand circular polarization , a first optical system (5) of the module (3) and a detector (6), wherein the first optical system (5) of the module comprises in sequence from the side for receiving a beam from the light source (1) a second optical sub-system (5.2), a linear polarizer (9) and a first optical sub- system (5.1), wherein the first optical sub-system (5.1) and the second optical sub-system (5.2) are selected to create parallel rays between both optical sub-systems (5.1), (5.2) and transfer an image from an image plane (2.3) to a plane coinciding with the detector (6).

2. The imaging module (3) according to the claim 1 **characterized in that** the first polarization sensitive beam splitter (4) is realized as a geometric-phase grating.

3. The imaging module (3) according to the claim 1 **characterized in that** the first optical sub-system (5.1) contains at least one imaging element with the positive optical power.

4. The imaging module (3) according to the claim 1 **characterized in that** the second optical sub- system (5.2) contains at least one imaging element with the positive optical power.

**5.** The imaging module (3) according to any of the preceding claims **characterized in that** the first optical system (5) of the module further contains the quarter-wave plate (10), which is placed between the first polarization sensitive beam splitter (4) and the linear polarizer (9).

**6.** The imaging module (3) according to the claims 1, 2 and 3 **characterized in that** it incorporates the second optical system (7) of the module, whilst the second optical system (7) of the module is placed in front of the first polarization sensitive beam splitter (4), and it further contains the second polarization sensitive beam splitter (8), which is placed between the first polarization sensitive beam splitter (4) and the first optical sub- system (5.1).

**7.** The imaging module (3) according to the claim 6 **characterized in that** it further contains the quarter-wave plate (10), whilst the quarter wave plate (10) is placed between the second polarization sensitive beam splitter (8) and the linear polarizer (9).

**8.** The imaging module (3) according to any of the preceding claims **characterized in that** it further contains the quarter-wave plate (11), which is place between the polarization adapted optical system (2) and the first polarization sensitive beam splitter (4).

**9.** A method for the off-axis recording of the polarization coded waves by the imaging module (3) according to any of the preceding claims **characterized in that**

- two polarization coded waves are divided into two directions in the image plane (2.3) by passage through the first polarization sensitive beam splitter (4), wherein each of the polarization coded waves propagates in a different direction,
- two polarization coded waves enter the first optical system (5) of the module, in which the electric field oscillations of the waves are projected into the same direction by the linear polarizer (9),
- two linearly polarized waves with the same direction of the electric field oscillations are projected by the first optical sub- system (5.1) on the detector (6),
- two polarized waves with the same direction of the electric field oscillations interfere at the detector (6), where the off-axis hologram with the spatial carrier frequency independent of the wavelength is created.

**10.** The method for the off-axis recording of the polarization coded waves by the imaging module (3) according to the claim 9 **characterized in that**

- the propagation direction of both polarization coded waves is influenced by the optical sub-system (5.2) after division of the waves by the first polarization sensitive beam splitter (4),
- the second optical sub-system (5.2) is designed and positioned with respect to the first polarization sensitive beam splitter (4) in such a way so as to create its image in infinity,
- two polarization coded waves pass through the linear polarizer (9) that projects their electric field oscillations into the same direction,
- two linearly polarized waves with the same direction of the electric field oscillations are projected by the first optical sub-system (5.1) on the detector (6),
- two linearly polarized waves with the same direction of the electric field oscillations interfere at the detector (6), where the off-axis hologram with the spatial carrier frequency independent of the wavelength is created.

**11.** The method for the off-axis recording of the polarization coded waves by the imaging module (3) according to the claims 9 or 10 **characterized in that**

- two polarization coded waves pass, before impinging on the linear polarizer (9), through the quarter-wave plate (10) that converts the orthogonal circular polarizations of the waves to the orthogonal linear polarization states,
- two polarization coded waves pass through the linear polarizer (9) that projects the electric field oscillations of the waves into the same direction, while affecting the amplitude of the waves in dependence on the angular orientation of the linear polarizer.

**12.** The method for the off-axis recording of the polarization coded waves by the imaging module (3) according to any of the claims 1 to 8 **characterized in that**

- two polarization coded waves are transformed from the image plane (2.3) to the plane of the polarization sensitive beam splitter (4) by the second optical system (7) of the module,
- two polarization coded waves are divided into two propagation directions by passing through the polarization sensitive beam splitter (4), wherein each of the polarization coded waves propagates in a different direction,
- the propagation direction of both polarization coded waves is further affected by the second polarization sensitive beam splitter (8), wherein the new propagation direction coincides with the propagation direction of both waves in front of the first polarization sensitive beam splitter (4),
- two polarization coded waves enter the first optical system (5) of the module, in which the electric field oscillations of the waves are projected into the same direction by the linear polarizer (9),

- two polarized waves with the same direction of the electric field oscillations interfere at the detector (6), where the off-axis hologram with the spatial carrier frequency independent of the wavelength is created.

13. The method for the off-axis recording of the polarization coded waves by the imaging module (3) according to the claim 12 **characterized in that**

- two polarization coded waves pass, before impinging on the linear polarizer (9), through the quarter-wave plate (10) that converts the orthogonal circular polarizations of the waves to the orthogonal linear polarization states,
- two polarization coded waves pass through the linear polarizer (9) that projects the electric field oscillations of the waves into the same direction, while affecting the amplitude of the waves in dependence on the angular orientation of the linear polarizer.

14. The method for the off-axis recording of the polarization coded waves by the imaging module (3) according to the claims 9 to 13 **characterized in that**

- the polarization coded waves, possessing the orthogonal linear polarizations at the output of the polarization adapted optical system (2), pass through the input quarter-wave plate (11) that converts the orthogonal linear polarizations of the waves to the orthogonal circular polarization states.

**Patentansprüche**

1. Ein Bildgebungsmodul (3) zur außeraxialen Aufzeichnung von polarisationskodierten Wellen, **dadurch gekennzeichnet, dass** das Bildgebungsmodul (3) in der Reihenfolge umfasst: eine Seite zur Aufnahme eines Lichtfeldes mit polarisationskodierten Wellen von einer Lichtquelle (1), einen ersten polarisationsempfindlichen Strahlteiler (4), der dazu eingerichtet ist, einer Winkeltrennung zwischen den Achsen der Strahlen mit der linken und rechten zirkularen Polarisation zu erzeugen, ein erstes optisches System (5) des Moduls (3) und einen Detektor (6), wobei das erste optische System (5) des Moduls von der Seite zur Aufnahme eines Strahls von der Lichtquelle (1) in der Reihenfolge ein zweites optisches Subsystem (5.2), einen linearen Polarisator (9) und ein erstes optisches Subsystem (5.1) umfasst, wobei das erste optische Subsystem (5.1) und das zweite optische Subsystem (5.2) ausgewählt sind, parallele Strahlen zwischen den beiden optischen Subsystemen (5.1), (5.2) zu erzeugen und ein Bild von einer Bildebene (2.3) in eine mit dem Detektor (6) zusammenfallende Ebene zu übertragen.

2. Das Bildgebungsmodul (3) nach Anspruch 1, **dadurch gekennzeichnet, dass** der erste polarisationsempfindliche Strahlteiler (4) als geometrisches Phasengitter ausgebildet ist.

3. Das Bildgebungsmodul (3) nach Anspruch 1, **dadurch gekennzeichnet, dass** das erste optische Subsystem (5.1) mindestens ein Bildgebungselement mit der positiven optischen Leistung umfasst.

4. Das Bildgebungsmodul (3) nach Anspruch 1, **dadurch gekennzeichnet, dass** das zweite optische Subsystem (5.2) mindestens ein Bildgebungselement mit der positiven optischen Leistung umfasst.

5. Das Bildgebungsmodul (3) nach einem der vorhergehenden Ansprüche, **dadurch gekennzeichnet, dass** das erste optische System (5) des Moduls ferner eine Viertelwellenplatte (10) umfasst, die zwischen dem ersten polarisationsempfindlichen Strahlteiler (4) und dem Linearpolarisator (9) angeordnet ist.

6. Das Bildgebungsmodul (3) nach den Ansprüchen 1, 2 und 3, **dadurch gekennzeichnet, dass** es ein zweites optisches System (7) des Moduls integriert, während das zweite optische System (7) des Moduls vor dem ersten polarisationsempfindlichen Strahlteiler (4) angeordnet ist, und es ferner einen zweiten polarisationsempfindlichen Strahlteiler (8) umfasst, der zwischen dem ersten polarisationsempfindlichen Strahlteiler (4) und dem ersten optischen Subsystem (5.1) angeordnet ist.

7. Das Bildgebungsmodul (3) nach Anspruch 6, **dadurch gekennzeichnet, dass** es ferner die Viertelwellenplatte (10) umfasst, wobei die Viertelwellenplatte (10) zwischen dem zweiten polarisationsempfindlichen Strahlteiler (8) und dem Linearpolarisator (9) angeordnet ist.

8. Das Bildgebungsmodul (3) nach einem der vorhergehenden Ansprüche, **dadurch gekennzeichnet, dass** es ferner eine Viertelwellenplatte (11) umfasst, die zwischen dem polarisationsangepassten optischen System (2) und dem ersten polarisationsempfindlichen Strahlteiler (4) angeordnet ist.

9. Ein Verfahren zur außeraxialen Aufzeichnung von den polarisationskodierten Wellen durch das Bildgebungsmodul (3) nach einem der vorhergehenden Ansprüche, **dadurch gekennzeichnet, dass**

- zwei polarisationskodierte Wellen durch das Durchlaufen durch den ersten polarisationsempfindlichen Strahlteiler (4) in zwei Richtungen in der Bildebene (2.3) aufgeteilt werden, wobei jede der polarisationskodierten Wellen sich in einer anderen Richtung ausbreitet,

- zwei polarisationskodierte Wellen in das erste optische System (5) des Moduls eintreten, in dem die elektrischen Feldschwingungen der Wellen durch den Linearpolarisator (9) in die gleiche Richtung projiziert werden,

- zwei linear polarisierte Wellen gleicher Richtung der elektrischen Feldschwingungen von dem ersten optischen Subsystem (5.1) auf den Detektor (6) projiziert werden,

- zwei polarisierte Wellen gleicher Richtung der elektrischen Feldschwingungen an dem Detektor (6) interferieren, wobei das außeraxiale Hologramm mit der räumlichen Trägerfrequenz unabhängig von der Wellenlänge entsteht.

10. Das Verfahren zur außeraxialen Aufzeichnung von den polarisationskodierten Wellen durch das Bildgebungsmodul (3), nach Anspruch 9, **dadurch gekennzeichnet, dass**

- die Ausbreitungsrichtung beider polarisationskodierter Wellen durch das optische Subsystem (5.2) nach dem Aufteilen der Wellen durch den ersten polarisationsempfindlichen Strahlteiler (4) beeinflusst wird,

- das zweite optische Subsystem (5.2) derart ausgebildet und bezüglich des ersten polarisationsempfindlichen Strahlteilers (4) positioniert ist, dass sein Bild im Unendlichen erzeugt wird,

- zwei polarisationskodierte Wellen durch den Linearpolarisator (9) durchlaufen, der deren elektrische Feldschwingungen in die gleiche Richtung projiziert,

- zwei linear polarisierte Wellen gleicher Richtung der elektrischen Feldschwingungen durch das erste optische Subsystem (5.1) auf den Detektor (6) projiziert werden,

- zwei linear polarisierte Wellen gleicher Richtung der elektrischen Feldschwingungen an dem Detektor (6) interferieren, wobei das außeraxiale Hologramm mit der räumlichen Trägerfrequenz unabhängig von der Wellenlänge entsteht.

11. Das Verfahren zur außeraxialen Aufzeichnung von den polarisationskodierten Wellen durch das Bildgebungsmodul (3), nach den Ansprüchen 9 oder 10, **dadurch gekennzeichnet, dass**

- zwei polarisationskodierte Wellen vor dem Auftreffen auf den Linearpolarisator (9) durch die Viertelwellenplatte (10) durchlaufen, die die orthogonalen zirkularen Polarisationen der Wellen in die orthogonalen linearen Polarisationszustände umwandelt,

- zwei polarisationskodierte Wellen durch den Linearpolarisator (9) durchlaufen, der die elektrischen Feldschwingungen der Wellen in die gleiche Richtung projiziert, während die Amplitude der Wellen in Abhängigkeit von der Winkelorientierung des Linearpolarisators beeinflusst wird.

12. Das Verfahren zur außeraxialen Aufzeichnung von den polarisationskodierten Wellen durch das Bildgebungsmodul (3) nach einem der Ansprüche 1 bis 8, **dadurch gekennzeichnet, dass**

- zwei polarisationskodierte Wellen von der Bildebene (2.3) in die Ebene des polarisationsempfindlichen Strahlteilers (4) durch das zweite optische System (7) des Moduls transformiert werden,

- zwei polarisationskodierte Wellen durch das Durchlaufen durch den polarisationsempfindlichen Strahlteiler (4) in zwei Ausbreitungsrichtungen aufgeteilt werden, wobei jede der polarisationskodierten Wellen sich in einer anderen Richtung ausbreitet,

- die Ausbreitungsrichtung beider polarisationskodierter Wellen durch den zweiten polarisationsempfindlichen Strahlteiler (8) weiter beeinflusst wird, wobei die neue Ausbreitungsrichtung der Ausbreitungsrichtung beider Wellen vor dem ersten polarisationsempfindlichen Strahlteiler (4) entspricht,

- zwei polarisationskodierte Wellen in das erste optische System (5) des Moduls eintreten, in dem die elektrischen Feldschwingungen der Wellen durch den Linearpolarisator (9) in die gleiche Richtung projiziert werden,

- zwei polarisierte Wellen gleicher Richtung der elektrischen Feldschwingungen an dem Detektor (6) interferieren, wobei das außeraxiale Hologramm mit der räumlichen Trägerfrequenz unabhängig von der Wellenlänge entsteht.

13. Das Verfahren zur außeraxialen Aufzeichnung von den polarisationskodierten Wellen durch das Bildgebungsmodul (3), nach Anspruch 12, **dadurch gekennzeichnet, dass**

- zwei polarisationskodierte Wellen vor dem Auftreffen auf den Linearpolarisator (9) durch die Viertelwellenplatte (10) durchlaufen, die die orthogonalen zirkularen Polarisationen der Wellen in die orthogonalen linearen Polarisationszustände umwandelt,

- zwei polarisationskodierte Wellen durch den Linearpolarisator (9) durchlaufen, der die elektrischen Feldschwingungen der Wellen in die gleiche Richtung projiziert, während die Amplitude der Wellen in Abhängigkeit von der Winkelorientierung des Linearpolarisators beeinflusst wird.

14. Das Verfahren zur außeraxialen Aufzeichnung von den polarisationskodierten Wellen durch das Bildgebungsmodul (3), nach den Ansprüchen 9 bis 13, **dadurch gekennzeichnet, dass**

    - die polarisationskodierten Wellen, die orthogonalen linearen Polarisationen am Ausgang des polarisationsangepassten optischen Systems (2) aufweisen, durch die Eingangs-Viertelwellenplatte (11) durchlaufen, die die orthogonalen linearen Polarisationen der Wellen in die orthogonalen zirkularen Polarisationszustände umwandelt.

## Revendications

1. Un module d'imagerie (3) pour l'enregistrement hors axe des ondes à codage de polarisation, **caractérisé en ce que** le module d'imagerie (3) comprend en séquence: un côté pour recevoir un champ lumineux comprenant des ondes à codage de polarisation provenant d'une source de lumière (1), un premier diviseur de faisceau sensible à la polarisation (4) adapté pour créer une séparation angulaire entre les axes des faisceaux avec la polarisation circulaire gauche et droite, un premier système optique (5) du module (3) et un détecteur (6), où le premier système optique (5) du module comprend en séquence à partir du côté pour recevoir un faisceau de la source de lumière (1) un deuxième sous-système optique (5.2), un polariseur linéaire (9) et un premier sous-système optique (5.1), où le premier sous-système optique (5.1) et le deuxième sous-système optique (5.2) sont sélectionnés pour créer des rayons parallèles entre les deux sous-systèmes optiques (5.1), (5.2) et pour transférer une image d'un plan d'image (2.3) à un plan coïncidant avec le détecteur (6).

2. Le module d'imagerie (3) selon la revendication 1, **caractérisé en ce que** le premier diviseur de faisceau sensible à la polarisation (4) est réalisé sous la forme d'une grille de phase géométrique.

3. Le module d'imagerie (3) selon la revendication 1, **caractérisé en ce que** le premier sous-système optique (5.1) comprend au moins un élément d'imagerie avec la puissance optique positive.

4. Le module d'imagerie (3) selon la revendication 1, **caractérisé en ce que** le deuxième sous-système optique (5.2) comprend au moins un élément d'imagerie avec la puissance optique positive.

5. Le module d'imagerie (3) selon l'une quelconque des revendications précédentes, **caractérisé en ce que** le premier système optique (5) du module comprend en outre une lame de quart d'onde (10), qui est placée entre le premier diviseur de faisceau sensible à la polarisation (4) et le polariseur linéaire (9).

6. Le module d'imagerie (3) selon les revendications 1, 2 et 3, **caractérisé en ce qu'**il incorpore un deuxième système optique (7) du module, tandis que le deuxième système optique (7) du module est placé devant le premier diviseur de faisceau sensible à la polarisation (4), et il comprend en outre un deuxième diviseur de faisceau sensible à la polarisation (8), qui est placé entre le premier diviseur de faisceau sensible à la polarisation (4) et le premier sous-système optique (5.1).

7. Le module d'imagerie (3) selon la revendication 6, **caractérisé en ce qu'**il comprend en outre la lame de quart d'onde (10), tandis que la lame de quart d'onde (10) est placée entre le deuxième diviseur de faisceau sensible à la polarisation (8) et le polariseur linéaire (9).

8. Le module d'imagerie (3) selon l'une quelconque des revendications précédentes, **caractérisé en ce qu'**il comprend en outre une lame de quart d'onde (11), qui est placée entre le système optique adapté à la polarisation (2) et le premier diviseur de faisceau sensible à la polarisation (4).

9. Un procédé d'enregistrement hors axe des ondes à codage de polarisation par le module d'imagerie (3) selon l'une quelconque des revendications précédentes, **caractérisé en ce que**

    - deux ondes à codage de polarisation sont divisées en deux directions dans le plan d'image (2.3) par passage à travers le premier diviseur de faisceau sensible à la polarisation (4), où chacune des ondes à codage de polarisation se propage dans une direction différente,
    - deux ondes à codage de polarisation entrent dans le premier système optique (5) du module, dans lequel les oscillations de champ électrique des ondes sont projetées dans la même direction par le polariseur linéaire (9),
    - deux ondes polarisées linéairement avec la même direction des oscillations de champ électrique sont projetées par le premier sous-système optique (5.1) sur le détecteur (6),
    - deux ondes polarisées avec la même direction des oscillations de champ électrique interfèrent au niveau du détecteur (6), où l'hologramme hors axe avec la fréquence porteuse spatiale indépendante de la longueur d'onde est créé.

10. Le procédé d'enregistrement hors axe des ondes à codage de polarisation par le module d'imagerie (3), selon la revendication 9, **caractérisé en ce que**

- la direction de propagation des deux ondes à codage de polarisation est influencée par le sous-système optique (5.2) après la division des ondes par le premier diviseur de faisceau sensible à la polarisation (4),
- le deuxième sous-système optique (5.2) est conçu et positionné par rapport au premier diviseur de faisceau sensible à la polarisation (4) de manière à créer son image à l'infini,
- deux ondes à codage de polarisation passent à travers le polariseur linéaire (9) qui projette leurs oscillations de champ électrique dans la même direction,
- deux ondes polarisées linéairement avec la même direction des oscillations de champ électrique sont projetées par le premier sous-système optique (5.1) sur le détecteur (6),
- deux ondes polarisées linéairement avec la même direction des oscillations de champ électrique interfèrent au niveau du détecteur (6), où l'hologramme hors axe avec la fréquence porteuse spatiale indépendante de la longueur d'onde est créé.

11. Le procédé d'enregistrement hors axe des ondes à codage de polarisation par le module d'imagerie (3), selon les revendications 9 ou 10, **caractérisé en ce que**

- deux ondes à codage de polarisation passent, avant d'impacter le polariseur linéaire (9), à travers la lame de quart d'onde (10) qui convertit les polarisations circulaires orthogonales des ondes en états de polarisation linéaire orthogonale,
- deux ondes à codage de polarisation passent à travers le polariseur linéaire (9) qui projette les oscillations de champ électrique des ondes dans la même direction, tout en affectant l'amplitude des ondes en fonction de l'orientation angulaire du polariseur linéaire.

12. Le procédé d'enregistrement hors axe des ondes à codage de polarisation par le module d'imagerie (3) selon l'une quelconque des revendications 1 à 8, **caractérisé en ce que**

- deux ondes à codage de polarisation sont transformées du plan d'image (2.3) au plan du diviseur de faisceau sensible à la polarisation (4) par le deuxième système optique (7) du module,
- deux ondes à codage de polarisation sont divisées en deux directions de propagation en passant à travers le diviseur de faisceau sensible à la polarisation (4), où chacune des ondes à codage de polarisation se propage dans une direction différente,
- la direction de propagation des deux ondes à codage de polarisation est en outre affectée par le deuxième diviseur de faisceau sensible à la polarisation (8), où la nouvelle direction de propagation coïncide avec la direction de propagation des deux ondes devant le premier diviseur de faisceau sensible à la polarisation (4),
- deux ondes à codage de polarisation entrent dans le premier système optique (5) du module, dans lequel les oscillations de champ électrique des ondes sont projetées dans la même direction par le polariseur linéaire (9),
- deux ondes polarisées avec la même direction des oscillations de champ électrique interfèrent au niveau du détecteur (6), où l'hologramme hors axe avec la fréquence porteuse spatiale indépendante de la longueur d'onde est créé.

13. Le procédé d'enregistrement hors axe des ondes à codage de polarisation par le module d'imagerie (3), selon la revendication 12. **caractérisé en ce que**

- deux ondes à codage de polarisation passent, avant d'impacter le polariseur linéaire (9), à travers la lame de quart d'onde (10) qui convertit les polarisations circulaires orthogonales des ondes en états de polarisation linéaire orthogonale,
- deux ondes à codage de polarisation passent à travers le polariseur linéaire (9) qui projette les oscillations de champ électrique des ondes dans la même direction, tout en affectant l'amplitude des ondes en fonction de l'orientation angulaire du polariseur linéaire.

14. Le procédé d'enregistrement hors axe des ondes à codage de polarisation par le module d'imagerie (3), selon les revendications 9 à 13, **caractérisé en ce que**

- les ondes à codage de polarisation, possédant les polarisations linéaires orthogonales à la sortie du système optique adapté à la polarisation (2), passent à travers la lame de quart d'onde d'entrée (11) qui convertit les polarisations linéaires orthogonales des ondes en états de polarisation circulaire orthogonale.

Figure 1

Figure 2

Figure 3

Figure 4

Figure 5

Figure 6

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CZ 302491
- EP 2378244 B1
- US 8526003 B2
- US 8334981 B
- US 8072610 B
- WO 2011042442 A

### Non-patent literature cited in the description

- **RONGLI G. et al.** Off-axis digital holographic microscopy with LED illumination based on polarization filtering. *Appl. Opt.,* 2013, vol. 52, 8233-8238
- Narrowband emission line imaging spectrometry using Savart plates. **MAIONE BRYAN et al.** PROCEEDINGS OF SPIE; [PROCEEDINGS OF SPIE ISSN 0277-786X VOLUME 10524. SPIE, 04 May 2016, vol. 9853, 985309-985309